# EUROPÄISCHE PATENTSCHRIFT

(11) **EP 1 755 370 B1**
(45) Veröffentlichungstag und Bekanntmachung des Hinweises auf die Patenterteilung: **03.09.2008**
(21) Anmeldenummer: 05757769.4
(22) Anmeldetag: 15.06.2005
(51) Int. Cl.: A01D 46/00, A01D 46/28, C12G 1/00, B04B 1/20

(54) **SPALIEROBST-, INSBESONDERE BEEREN- ODER TRAUBENERNTEFAHRZEUG UND -VERFAHREN**
VEHICLE AND METHOD FOR HARVESTING ESPALIER FRUIT, ESPECIALLY BERRIES OR GRAPES
VEHICULE ET PROCEDE POUR RECOLTER DES FRUITS CULTIVES EN ESPALIER, EN PARTICULIER DES GRAINS OU DES GRAPPES DE RAISIN

(30) Priorität: 17.06.2004 DE 102004029394
(43) Veröffentlichungstag der Anmeldung: 28.02.2007
(73) Patentinhaber: Westfalia Separator GmbH, 59302 Oelde (DE); ERO-GERÄTEBAU GmbH, 55469 Niederkumbd (DE); Hochschule Wädenswil, 8820 Wädenswil (CH)
(72) Erfinder: HAMATSCHEK, Jochen, 59302 Oelde (DE); SCHAUZ, Frank, 59302 Oelde (DE); SCHÖTTLER, Peter, 59302 Oelde (DE); BEYER, Hans-Joachim, 59320 Ennigerloh (DE); ZIELKE, Dominik, 59320 Ennigerloh (DE); ERBACH, Michael, 55469 Niederkumbd (DE); HÜHN, Tilo, CH-8824 Schönenberg (CH)
(74) Vertreter: Dantz, Jan Henning
(86) Internationale Anmeldenummer: PCT/EP2005/006381
(87) Internationale Veröffentlichungsnummer: WO 2005/122746

(56) Entgegenhaltungen:
- EP-A- 0 671 465
- WO-A-02/089992
- DE-A- 3 343 602
- FR-A- 2 786 361

## Beschreibung

Die Erfindung betrifft ein Spalierobst-, insbesondere Beeren- oder Traubenerntefahrzeug nach dem Oberbegriff des Anspruchs 1, ein Fahrzeug nach dem Oberbegriff des Anspruchs 2 und ein Verfahren zur Spalierobst-, insbesondere Beeren- oder Traubenernte und -weiterverarbeitung nach dem Oberbegriff des Anspruchs 18.

Vollautomatische Erntefahrzeuge z.B. zur Traubenernte sind an sich bekannt. Eine besonders bevorzugte Bauart derartiger Fahrzeuge dient zum Abernten der Trauben von Weinstöcken, die in Rebzeilen angebaut werden. Auch das erfindungsgemäße Verfahren eignet sich insbesondere zur Traubenernte und Weiterverarbeitung der Trauben - vorzugsweise für die Herstellung eines Saftes oder Mostes zur Herstellung eines Weines. Neben der Traubenernte und Verarbeitung direkt im Fahrzeug ist ein weiteres bevorzugtes Anwendungsgebiet die Ernte und Weiterverarbeitung anderer Früchte oder Pflanzenteile, die im Spalierbau angebaut werden, so die Ernte von Johannisbeeren oder anderen Früchten, die mit einem Erntefahrzeug der gattungsgemäßen Art abgeerntet werden können. Nachfolgend wird die Erfindung insbesondere am Beispiel der besonders bevorzugten Traubenernte und der Traubenverarbeitung beschrieben, sie ist aber nicht auf diese Applikation beschränkt.

Es ist auch an sich bekannt, direkt auf dem Erntefahrzeug eine Weiterverarbeitung des Ernteguts vorzunehmen. So werden beispielsweise mittels einer Entrappeinrichtung oder Abbeereinrichtung die einzelnen Beeren von den Trauben gelöst. Die Beeren werden sodann in einem Sammel- bzw. Puffertank am Fahrzeug gesammelt und der weiteren Verarbeitung außerhalb des Fahrzeugs zugeführt. Alternativ ist es auch bekannt, die ganzen Trauben in die Kellerei zu fahren.

Nachteilig ist, daß insbesondere bei dem vorstehend beschriebenen Traubenemteverfahren auch die Blätter oder andere unerwünschte Pflanzenteile sowie die Kerne und Häute und/oder unerwünschte Teile des Fruchtfleisches der Trauben mit vom Weinberg entfernt und erst dann später von den Trauben getrennt werden, so daß es nötig ist, die überschüssigen Feststoffbestandteile entweder zu entsorgen, in anderer Weise zu verwerten oder mittels eines weiteren Fahrzeuges wieder zurück in den Weinberg zu verbringen.

Zum Stand der Technik werden noch die DE 25 19 120 A, welche ein Maschine zur Ernte von Obst beschreibt, die DE 20 03 324 A, die ein Fahrzeug zum Keltern von Weintrauben offenbart, und die US 3 713 887 A, welche die Verarbeitung von Trauben auf einem Fahrzeug unter Wirkung eines Inertgases beschreibt, genannt.

FR-A-2 786 361 gemöffenlich ein obenenlazeung gemäß den obelichnet den Anspruch 2.

Es ist ferner aus der DE 33 43 602 A1 bekannt, auf dem Erntefahrzeug eine Schneckenpresse anzuordnen, welche die Früchte durch eine Presswirkung komprimiert und entsaftet. Diese Konstruktion hat sich nicht bewährt, insbesondere da die Qualität des erzeugten Saftes nicht genügend ist.

Die Erfindung hat insbesondere die Aufgabe, dieses Problem zu lösen.

Die Erfindung löst ihre Aufgabe in Hinsicht durch die Gegenstände der Ansprüche 1, 2 und 18.

Danach ist direkt im Erntefahrzeug eine Schneckenzentrifuge, insbesondere eine Vollmantel-Schneckenzentrifuge - auch Dekanter genannt - angeordnet, die zur Trennung und/oder Klärung einer Fruchtmaische wenigstens in eine Feststoff- und eine Flüssigkeitsphase dient.

Besonders vorteilhaft ist, daß die mechanische Beanspruchung des Erntegutes anders als beim Einsatz einer Schneckenpresse gering ist und daß keine zeitliche Verzögerung in der Verarbeitung auftritt, was mögliche unerwünschte Einflüsse von Mikroorganismen oder die Einflüsse von Substanzen aus Pflanzenteilen (z.B. Stielen, Blättem) vermindert und auch zu einer Verringerung unerwünschter ernteguteigener Enzymeinflüsse beiträgt.

Die Erfindung eignet sich insbesondere zur Traubenernte, sie ist aber auch bei den anderen Früchten anwendbar.

Da nach der Erfindung eine Schneckenzentrifuge in vorteilhafter Weise direkt am oder im selbstfahrenden Vollernter angeordnet ist, kann z.B. bei einer Auslegung als Traubenerntefahrzeug das Entsaften direkt im Weinberg noch auf dem Fahrzeug während der Erntefahrt erfolgen. Analoges gilt für die Entsorgung des Tresters und der Rappen im Weinberg, die nach dem Austrag aus der Vollmantel-Schneckenzentrifuge als Dünger gleich in den Boden eingearbeitet werden können (z.B. direkt durch die Reifen). Da es sich bei der Schneckenzentrifuge um eine kontinuierlich arbeitende Maschine handelt, erfolgt auch der Austrag kontinuierlich.

Das erfindungsgemäße Spalierobst-, insbesondere Beeren- oder Traubenerntefahrzeug sowie das Ernteverfahren eignen sich besonders zur Gewinnung eines Saftes und/oder Mostes z.B. bei der Herstellung von Weinen aller Art, insbesondere Weißwein, Rosé und zur Herstellung von Sektgrundwein. Sogar bei der Rotweinherstellung ist ihr Einsatz denkbar, ggf. in Verbindung mit weiteren Verarbeitungsschritten direkt auf dem Fahrzeug oder nach dem Entleeren des Tankes für den gewonnenen Most. Eine Eignung zur Ernte und Verarbeitung von Rotwein kann insbesondere durch eine Kombination des erfindungsgemäßen Verfahrens mit einem Schritt eines thermischen oder nichtthermischen Verfahrens zur Farbstoffextraktion (z.B. Elektroporation) erreicht werden.

Mittels der Erfindung werden die Kosten der Ernte und der Weiterverarbeitung deutlich gesenkt. Bei der Traubenernte und -verarbeitung entfallen sowohl die Weiterverarbeitung mittels einer Presse oder einer Vollmantel-Schneckenzentrifuge in der Kelterei, so daß einerseits die Investitionen der Kellerei gesenkt werden können und andererseits auch der nötige Personalbedarf zur Gewinnung des Traubenmostes verringert wird. Vorteilhaft ist auch, daß sowohl das Transportvolumen zur Kellerei verringert wird, als auch, dass der möglicherweise erforderliche Rücktransport des Tresters aus der Kellerei in den Weinberg entfällt.

Besonders vorteilhaft ist auch die mit der Vollmantel-Schneckenzentrifuge entstehende optionale Möglichkeit der kontinuierlichen Schönung und/oder der Enzymierung des Mostes direkt auf dem Vollernter, insbesondere im kontinuierlichen Prozess.

Die Schneckenpresse der DE 33 43 602 A1 stellt von ihrem Wirkprinzip her keine Zentrifuge dar sondern eine klassische hier konische Presse, die auf dem Wirkprinzip des Auspressens kompressibler Stoffe beruht. Demgegenüber erfolgt das Gewinnen von Most erfindungsgemäß bei einer Beschleunigung im Zentrifugalfeld von in der Regel bzw. vorzugsweise mehr als 1000g ( 1000g = 1000fache Erdbeschleunigung), insbesondere mehr als 2000g. Eine Schneckenpresse gewährleistet zwar auch einen kontinuierlichen Betrieb auf dem Fahrzeug. Durch die Verengung des konischen Gehäuses und die Stauwirkung des Austrittskopfes wird das Gut komprimiert, so dass auf die Trauben ein komprimierender Druck wirkt, der zum Auspressen der Trauben führt. Eine klärende Wirkung kann mit einer derartigen Konstruktion nicht erzielt werden. Insbesondere ist der zu erreichende Trubgehalt bei der Verarbeitung von Weintrauben unbefriedigend, wohingegen mit dem Dekanter auf dem Erntefahrzeug ein Trubgehalt von weniger als 1Vol% (Sekundärtrub) erreicht wird, was es möglich macht - falls gewünscht - auf eine Entschleimung zu verzichten. Der Dekanter vermeidet weitergehend als die Schneckenpresse die Extraktion unerwünschter Bestandteile, da eine Presse auf alle Teile der Frucht, z.B. auch auf Stiele und Kerne, eine starke komprimierende Presskraft ausübt und dadurch, sowie als Wirkung des Siebelementes, mechanischen Beschädigungen auftreten, was sich auf den Trubgehalt und allgemein die Qualität des Mostes nachteilig auswirkt. Der Trubgehalt wird hauptsächlich durch die Siebgestaltung der Presse beeinflusst, da Fruchtteile aufgrund der Drücke durch die Perforation der.Siebbleche gedrückt werden.

Eine Zermahlung der Fürchte vor der Verarbeitung ist in der Regel - insbesondere bei der Herstellung von Wein - durch den Dekanter nicht erforderlich. Gegenüber der Schneckenpresse sind mit der Erfindung direkt am Fahrzeug deutlich bessere Mostqualitäten erzielbar, was den Einsatz des Dekanters sinnvoll macht, zumal die Sicherheit deutlich höher ist als vermutet und kritische Situationen - beispielsweise durch Einsatz einer Fangeinrichtung für die Trommel - siehe unten - nahezu ausgeschlossen werden können.

Da Schneckenpressen nur sehr langsam rotieren, sind sie aus sicherheitstechnischer Sicht perse unkritisch, was wohl ein Grund dafür ist, dass der Einsatz schnell rotierender Zentrifugen auf Erntefahrzeugen zur Ernte von Früchten und dgl., die im Spalierbau angebaut werden, bisher nicht erwogen wurde. Nachteilig ist auch die Qualität des Weines. Zudem ist die Ausbeute der Schneckenpresse geringer als die eines Dekanter, was ein weiterer Vorteil des Dekanters ist (weniger Fahrten). Der Dekanter ist zudem hygienischer, da er auch ein geschlossenes System darstellt. Der Dekanter trägt zudem Feststoffe wie Staub sicher aus, die er zuvor abgetrennt hat, während diese durch die Schneckenpresse mit in den Most gelangen können. Zudem ist auch der erzielbare Durchsatz am Dekanter auf dem Fahrzeug höher.

Wenn als Antriebsvorrichtung die vorhandene Hydraulik des Fahrzeuges genutzt wird, ist einerseits eine kostengünstige Realisierung des Antriebs der Vollmantel-Schneckenzentrifuge und andererseits eine leichte Regelbarkeit des Antriebs bzw. der beiden Antriebe der Schnecke als auch der Trommel möglich. Vorteilhaft kann hier das an Traubenerntefahrzeugen sowieso vorhandene leistungsfähige Hydraulikaggregat genutzt werden, dass wiederum zum Antrieb von einem oder zwei Hydraulikmotoren genutzt wird, mit welchen die Trommel und die Schnecke der Vollmantelzentrifuge angetrieben werden. Andere Antriebskonzepte wie Elektromotoren, Gas, Diesel-oder Hybridaggregate oder dgl. sind ebenfalls denkbar.

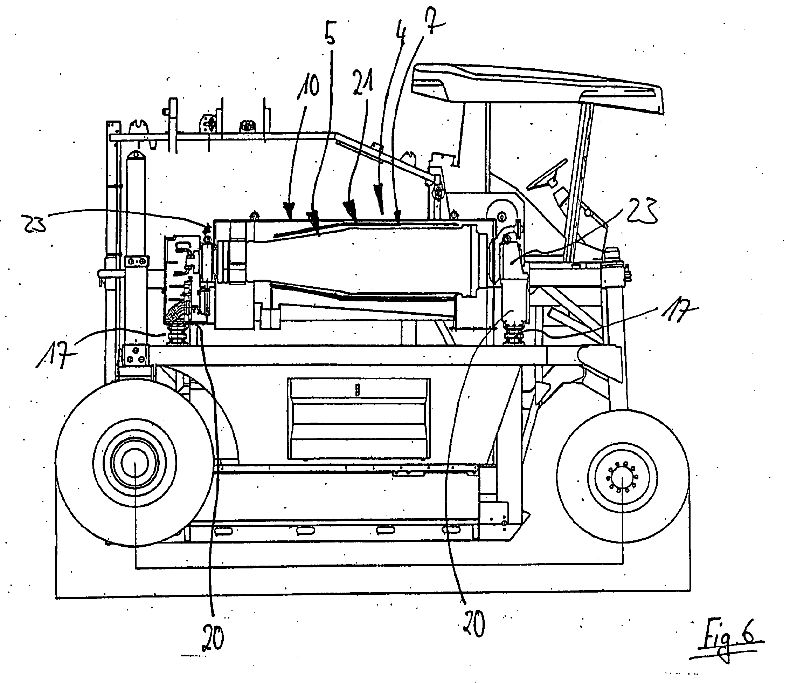

Da die Vollmantel-Schneckenzentrifuge eine hochtourige Zentrifuge mit einem hohen Potential an Rotationsenergie ist, sind zum Schutz des Bedienpersonals und Fahrers des Erntefahrzeugs verschiedene Sicherheitsmerkmale realisiert. Zunächst einmal ist eine Fangeinrichtung installiert (Fig. 6).

Vorzugsweise besteht die Fangeinrichtung aus Blechen und/oder Bügeln aus Streben, welche einen Fangkäfig ausbilden, der die Trommel ganz oder zumindest teilweise umgibt und als separates Mittel innerhalb der Haube bzw. Zentrifugengehäuses befestigt und/oder als Bestandteil der Haube und des Zentrifugengehäuses ausgebildet ist. Diese ganz besonders vorteilhafte "Notlagerung" der Trommel für den Fall des Versagens der Trommellagerung (z.B. Wälzlagern) stellt sicher, daß sich die rotierende Trommel nicht vom Fahrzeug lösen kann, sondern auch nach einem Lösen aus den Lagern in der Fangeinrichtung verbleibt, wo sie sich auf einfache Weise und sicher ausdrehen kann, ohne das eine direkte Gefahr für das Bedienpersonal besteht.

Damit sich die Haube auch durch starke Krafteinwirkung nicht vom Zentrifugengestell lösen kann, sind am Umfang (der Trennfuge von Haube und Gestell) verteilt Haltebügel angebracht.

Zusätzlich sind die Füße und Federelemente als "abreißsichere" Schwingelemente ausgeführt, so dass ein Lösen der Vollmantel-Schneckenzentrifuge vom Fahrzeugrahmen auch im Schadensfall sicher verhindert wird.

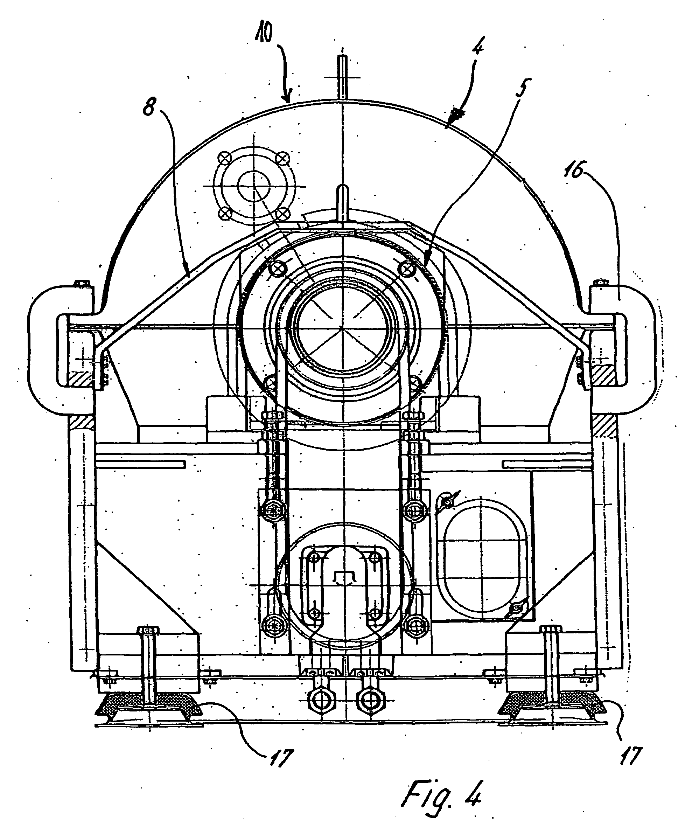

Des Weiteren besteht die Fangeinrichtung (Fig. 4) aus gekanteten Blechen oder Flacheisenbügeln, welche über die Lagergehäuse greifen und links und rechts der Trommel außerhalb des Hauben- , bzw. Gehäuseraumes der Vollmantel-Schneckenzentrifuge angeordnet sind und am Gestell der Zentrifuge befestigt sind.

Zwar ist auch in der Vergangenheit Kenntnis bereits mit einer Zentrifuge an einer Erntemaschine, einer Kartoffelerntemaschine, experimentiert worden. Diese Lösung hat sich in der Praxis aber nicht durchsetzen können, insbesondere da Sicherheitsbedenken bestanden. Diese Bedenken sprachen auch gegen einen Einsatz an Spalierobst-, insbesondere Beeren- oder Traubenerntemaschinen, die ja zudem oftmals an Hängen mit starker Neigung eingesetzt werden und in Extremsituationen theoretisch sogar umkippen könnten, wenn sie grob fehlerhaft gefahren werden.

Um so bemerkenswerter ist der Einsatz der Vollmantel-Schneckenzentrifuge gerade an der komplizierter und besonders hoch bauenden Traubenerntemaschine. Möglich wird er insbesondere auch durch die geschickte Anordnung vorzugsweise neben einer seitlichen U-förmigen Aussparung im Grundrahmen zum Übergreifen einer Pflanzenreihe (z.B. Rebstöcke) sowie vorzugsweise durch die Fangeinrichtung als zusätzliche Sicherheitseinrichtung, die selbst im unwahrscheinlichen Fall des Kippens des Erntefahrzeuges sowie im Fall des Versagens der Lagerung ein ungefährliches Ausdrehen der Trommel bis zum Stillstand sicherstellt.

Zwar sind auch aus dem stationären Einsatz Hauben zum Schutz der Trommel und als Berührungsschutz bekannt. Diese sind nicht so ausgelegt, dass sie eine aus der Verankerung sich lösende Trommel in ihrem Inneren halten können. Dies ist ein wesentlicher Unterschied zwischen bekannten Hauben und den - z.B. röhrenartigen - und ergänzend zu den Hauben noch vorgesehenen Fangeinrichtungen nach bevorzugten Ausgestaltungen der Erfindung.

Vorzugsweise wird die Vollmantel-Schneckenzentrifuge derart am Fahrzeug angeordnet, daß sie mittels einer Neigevorrichtung allein oder mitsamt dem Fahrzeugaufbau in Abhängigkeit von der Schräglage der abzuerntenden Rebzeile stets horizontal oder vertikal ausgerichtet werden kann.

Denkbar wäre auch die Ausgestaltung der Vollmantel-Schneckenzentrifuge als Schälscheibenmaschine, um einen Pumpeffekt zu erzielen. Die Schälscheibe fördert in diesem Fall auf der Flüssigkeitsseite der Zentrifuge den geklärten Most zur nächsten Station im Verarbeitungsablauf, z.B. in den Most-Sammeltank ohne eine zusätzlich erforderliche Pumpe.

Vorzugsweise verfügt das Erntefahrzeug auch direkt über einen oder mehrere der Vollmantel-Schneckenzentrifuge vor- oder nachgeschaltete Puffer- oder Sammeltanks, welche die Beherrschbarkeit des Verfahrens erleichtern und vorzugsweise auch über eine Pumpe, insbesondere zur einfachen und besonders raschen "SchnellEntleerung" des Puffer- oder Sammeltanks.

Vorteilhaft ist auch, wenn die Vollmantel-Schneckenzentrifuge derart am Fahrzeug angeordnet ist, dass stets im wesentlichen oder genau (z.B. Neigung kleiner 3° zur Horizontalen) eine Horizontalausrichtung der Vollmantel-Schneckenzentrifuge auch am Hang gewährleistet wird, denn der Fahrzeugaufbau kann mit der Vollmantel-Schneckenzentrifuge mit einer Neigevorrichtung - hier nicht zu erkennen - relativ zu den Rädern verschwenkt werden.

Die Erfindung schafft auch ein Olivenerntefahrzeug zum Ernten der Früchte und zur Weiterverarbeitung, insbesondere zu einem Öl auf dem Erntefahrzeug, mit folgenden Merkmalen: einem Rahmen, der dazu ausgelegt ist, eine Reihe von abzuerntenden Pflanzen im Bereich einer u-förmigen Aussparung zu übergreifen, und an dem Rahmen angeordneten Rädern beidseits der u-förmigen Aussparung, und zumindest einer Einrichtung zum Abtrennen der Früchte von den Pflanzen, wobei direkt im Erntefahrzeug eine Schneckenzentrifuge, insbesondere eine Vollmantel-Schneckenzentrifuge, angeordnet ist, die zur Trennung und Klärung eines Olivenbreis wenigstens in eine Öl- und eine Wasserphase dient. Dabei wird aus den Oliven - ggf. nach einer Vorbehandlung wie einem Entkernen und/oder einem Zermahlen oder dgl. - direkt auf dem Erntefahrzeug in einem Dekanter aus einem Fruchtbrei z.B. in einem Zwei- oder Dreiphasenverfahren (Öl/Wasser-Feststoffe oder Öl/Wasser/Feststoffe) Olivenöl gewonnen. Auch hier bringt die Verarbeitung direkt auf dem Fahrzeug erhebliche Vorteile mit sich.

Weitere vorteilhafte Ausgestaltungen sind den übrigen Unteransprüchen zu entnehmen.

Die Fangeinrichtung stellt auch eine eigenständige Erfindung im Zusammenspiel mit einem Dekanter an einem Fahrzeug dar, dessen Gegenstand im Anspruch 12 angegeben ist.

Nachfolgend wird die Erfindung anhand von Ausführungsbeispielen unter Bezug auf die Zeichnung näher beschrieben. Es zeigt:
- Fig. 1: eine schematische Seitenansicht des grundsätzlichen Aufbaus eines Traubenerntefahrzeugs mit einer Vollmantel-Schneckenzentrifuge mit einer schematischen Darstellung einiger der - an sich bekannten - Ein-richtungen zur eigentlichen Traubenernte;
- Fig. 2: das Traubenerntefahrzeug aus Fig. 1 in einer Heckansicht mit Dekanter;
- Fig. 3: ein weiteres Trauben bzw. Beerenerntefahrzeug in einer Heckansicht mit Dekanter, das ergänzend eine Vermahleinrichtung aufweist;
- Fig. 4: eine schematische Ansicht einer Vollmantel-Schneckenzentrifuge, wie sie in das Fahrzeug eingebaut wird;

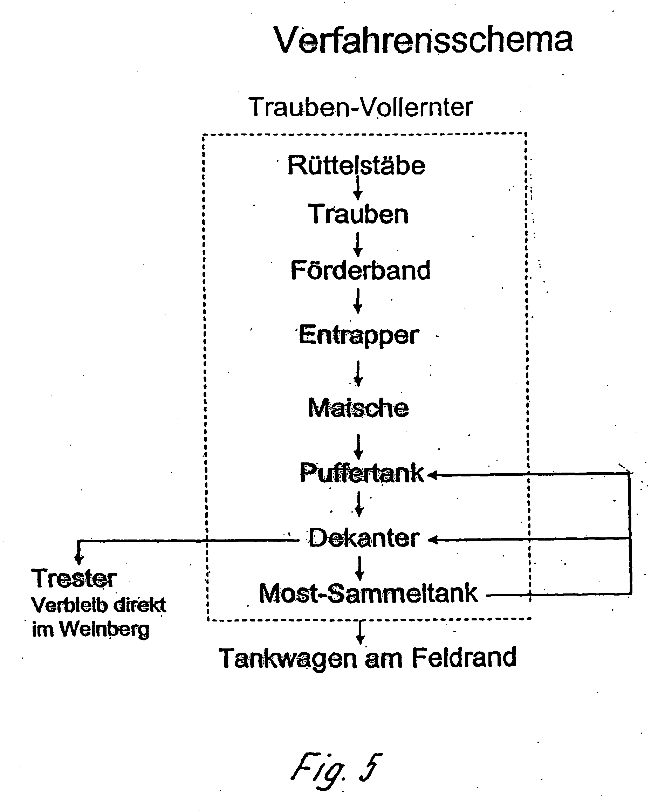

- Fig. 5: ein Verfahrensschema zur Traubenernte und -verarbeitung mit dem Fahrzeug aus Fig. 1 und 2;
- Fig. 6: ein weiteres Erntefahrzeug mit Dekanter in einer stark vereinfachten schematisierten Seitenansicht zur Veranschaulichung einer weiteren möglichen Einbaustellung des Dekanters; und
- Fig. 7: eine weitere schematische Ansicht einer Vollmantel-Schnecken-zentrifuge, wie sie in das Fahrzeug eingebaut wird; und

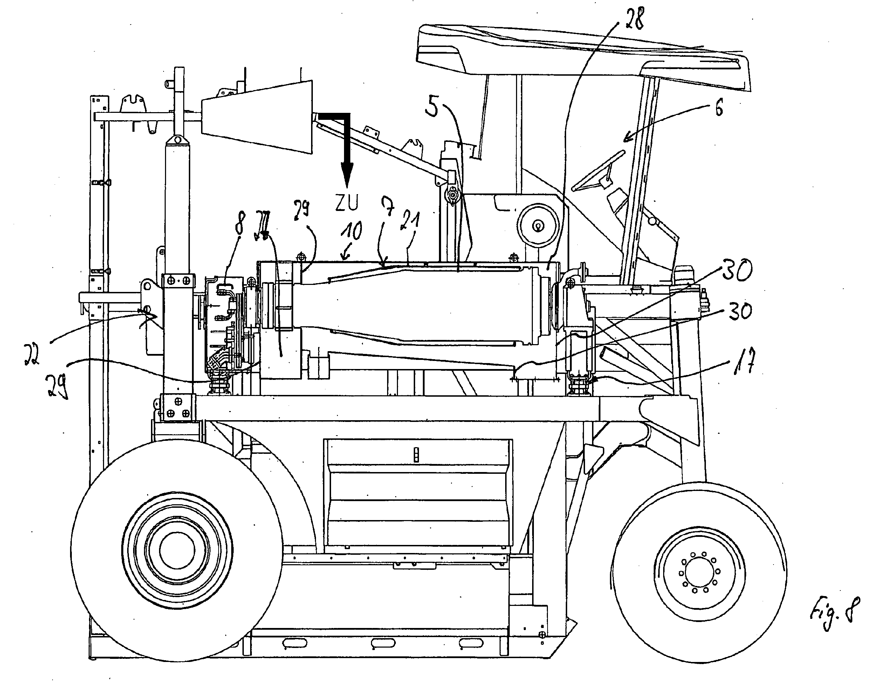

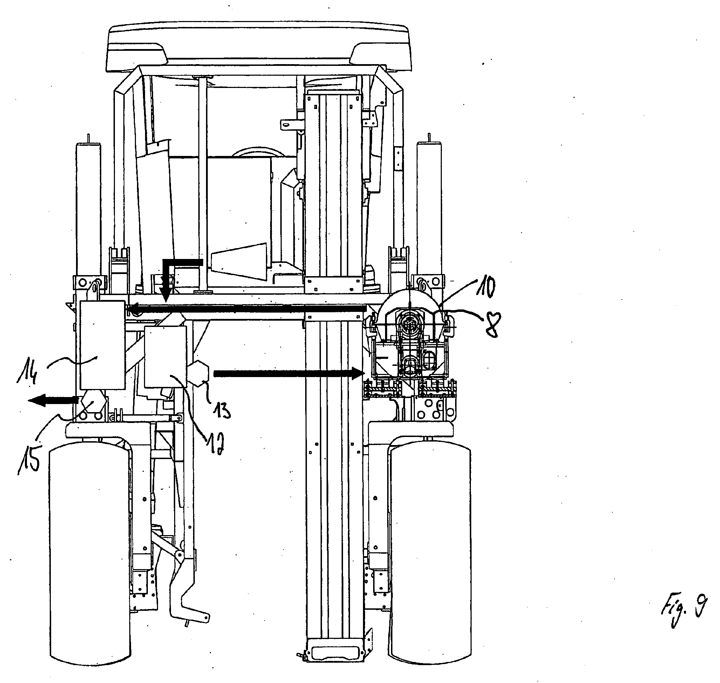

- Fig. 8, 9: Ansichten eines weiteren Erntefahrzeugs in schematischer Darstellung.

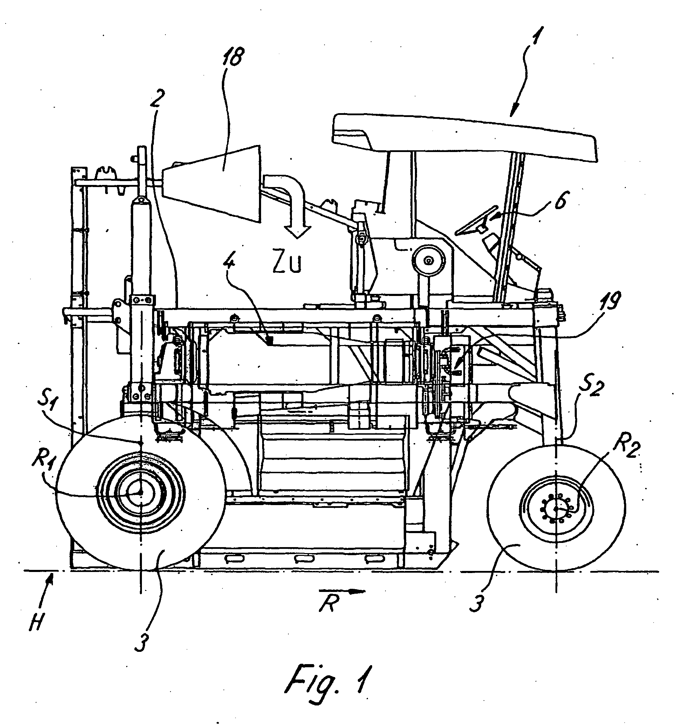

Fig. 1 zeigt ein Erntefahrzeug, das in besonders bevorzugter Ausführungsform als Trauben-Emtefahrzeug 1 ausgebildet ist, welches dazu ausgelegt ist, Trauben von Pflanzen - Rebstöcken - einer Reihe (Rebzeile) zu ernten und die geernteten Trauben weiterzuverarbeiten. Die Erfindung eignet sich daneben auch für Spalierobst-, insbesondere Beeren- oder Traubenerntemaschinen der gattungsgemäßen Art, bei denen jeweils eine Adaption der Erntevorrichtungen und eine Neueinstellung des Dekanters erfolgen sollte.

Das Fahrzeug nach Anspruch 1 ist als selbstfahrendes, angetriebenes Fahrzeug ausgelegt, was vorteilhaft ist, da das Fahrzeug über einen leistungsstarken Antrieb verfügt. Auslegungen als Anhängefahrzeug oder als Gespann aus Zugfahrzeug und Anhänger oder Auflieger sind ebenfalls denkbar.

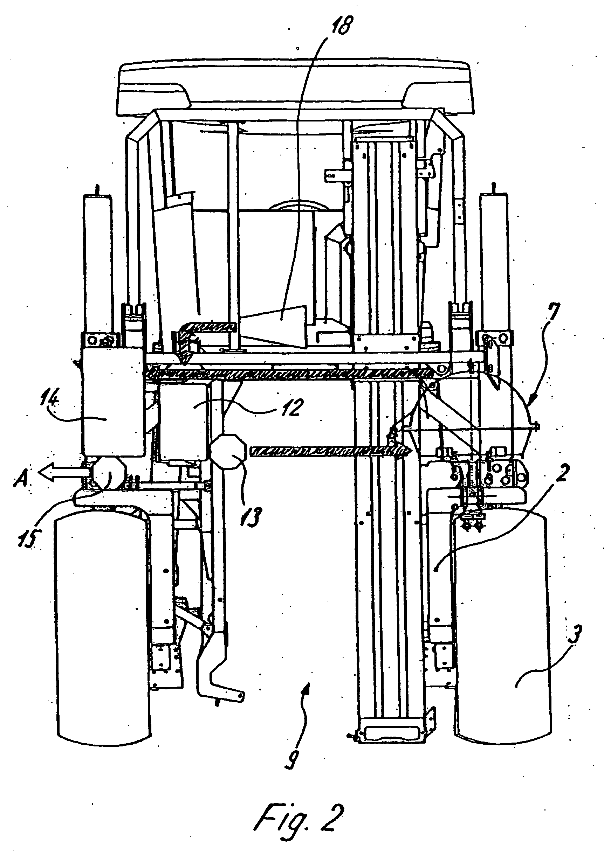

Das Erntefahrzeug 1 weist einen Rahmen 2 auf, welcher derart ausgelegt ist, dass er die Rebstöcke einer abzuerntenden Rebzeile quer zur Fahrzeuglängsrichtung R jeweils nach Art einer U-förmigen Aussparung 9 übergreift (Fig. 2). An dem Rahmen 2 sind hier beidseits der Rebstöcke jeweils beispielhaft zwei in Fahrtrichtung hintereinander stehende Räder 3 angeordnet. Denkbar ist auch, statt der Räder einen Antrieb mittels zumindest einem Kettenpaar zu wählen. Ein Kettenfahrzeug sinkt bei weichem, kritischem Untergrund nicht so tief ein wie ein Räderfahrzeug.

Das Erntefahrzeug umfasst eine an sich bekannte - hier aber nicht dargestellte - Einrichtung zum Abtrennen der Trauben von den Rebstöcken sowie vorzugsweise auch eine Entrappeinrichtung 18, welche die einzelnen Beeren von den Trauben löst - hier ebenfalls nicht dargestellt.

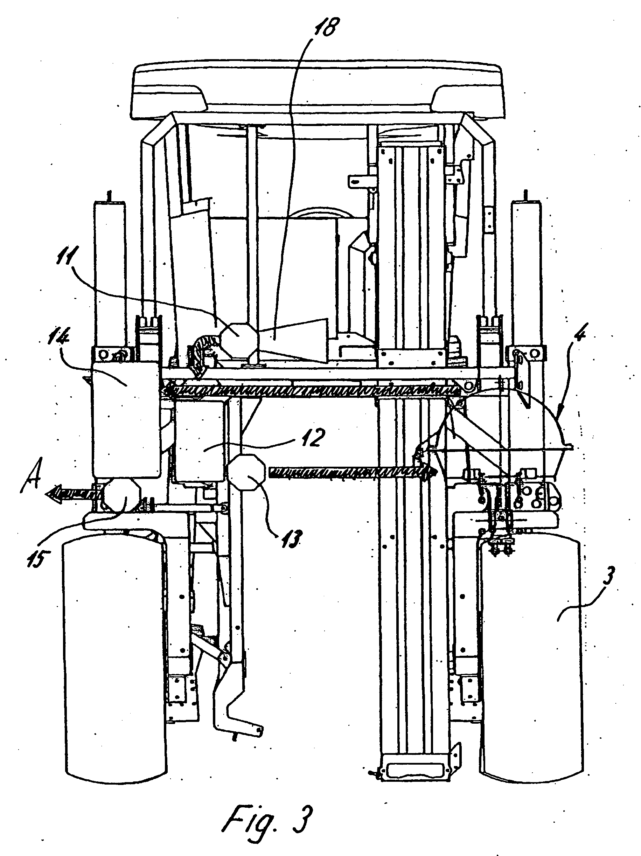

Die derart gewonnenen Beeren werden
- direkt oder
- über eine Entrappeinrichtung 18 und/oder
- über eine Vermahleinrichtung 11 (siehe Fig. 3, wo ein Ausführungsbeispiel zur Verarbeitung eines sonstiges Erntegutes wie Obst gezeigt ist, das zunächst zermahlen wird), und/oder
- über einen oder mehrere Puffertanks 12 (Maischepuffertank)
- und/oder eine Pumpe 13
in eine Vollmantel-Schneckenzentrifuge 4 - eine Schneckenzentrifuge, hier mit einer Vollmanteltrommel 5 (siehe auch Fig. 6) - geleitet, in der eine Trennung und Klärung des Mostes insbesondere vom Trester, d.h. von den Schalen und ggf. Kernen und/oder sonstigen Bestandteilen erfolgt. Die Zu- und Ableitungen werden hier nur schematisch durch Pfeile angedeutet. Vom Puffertank 12 erfolgt die Zuleitung durch eine Leitung in die Zentrifuge.

Der aus dem Feststoffaustrag der Vollmantel-Schneckenzentrifuge 4 ausgeförderte Trester kann entweder gesammelt oder direkt wieder in den Weinberg verbracht werden, wohingegen der aus dem Flüssigkeitsaustrag der Vollmantel-Schneckenzentrifuge 4 abgeleitete Most in einem Sammeltank 14 (Mosttank) am Erntefahrzeug gesammelt und dann der weiteren Verarbeitung zugeleitet wird (siehe das Verfahrenschemabeispiel der Fig. 3). Das Ableiten aus dem Sammeltank 14 erfolgt bevorzugt mittels einer besonders schnell entleerenden Pumpe 15 (Mostpumpe)

Während der Ernte stehen die Räder 3 des Fahrzeugs beidseits der abzuerntenden Pflanzen einer Reihe, insbesondere Rebstöcke einer Rebzeile am Boden auf, so dass der Rahmen 2 die Rebzeile übergreift.

Der Fahrer sitzt oberhalb des Rahmens 2 direkt über der Rebzeile in einer Fahrerkabine 6.

Die Vollmantel-Schneckenzentrifuge 4 ist dagegen hier seitlich der Rebzeile bzw. der U-förmigen Aussparung 9 am Rahmen 2 oberhalb der Räder 3 angeordnet. Sie liegt hier zwischen Senkrechten S1, S2 zur Horizontalen H, welche durch die beiden Radachsen R1, R2 verlaufen. Andere Arten der Anordnung des Dekanters insbesondere direkt am Rahmen sind ebenfalls denkbar, insbesondere eine Anordnung zwischen Rädern, um das Gewicht des Dekanters möglichst tief am Fahrzeug anzubringen.

Die Vollmantel-Schneckenzentrifuge wird in der Regel am Fahrzeug mit horizontaler Drehachse installiert. Denkbar ist jedoch auch eine Installation mit senkrecht angeordneter Drehachse.

Fig. 1 zeigt auch eine Neigevorrichtung 22 zum Neigen des Fahrzeugaufbaus relativ zu den Rädern am Hang.

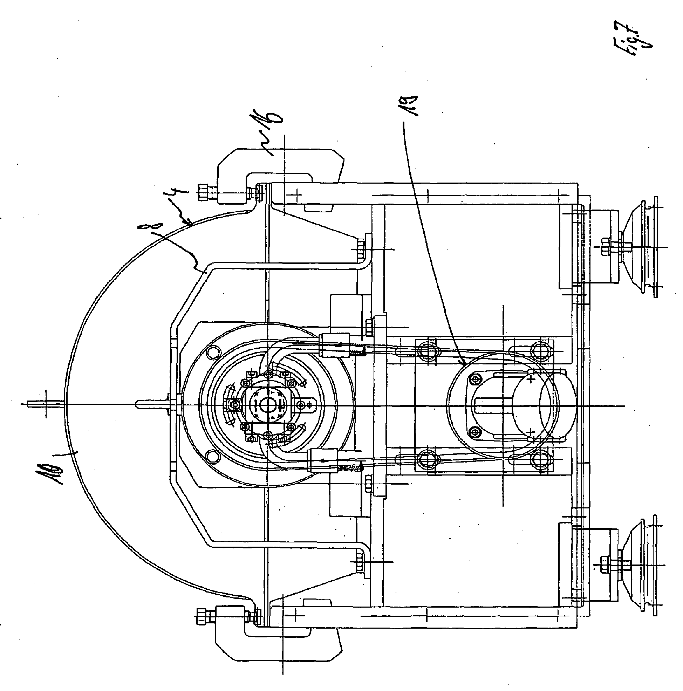

Die Vollmantel-Schneckenzentrifuge 4 wird bevorzugt mittels der am Fahrzeug vorhandenen Hydraulik über einen oder zwei Hydraulikmotor(e) 19 (siehe auch Fig. 7) angetrieben. Diese Lösung ist kostengünstig und in kompakter Bauart realisierbar. Denkbar sind aber auch andere Antriebskonzepte.

Zur Gewährleistung einer genügenden Sicherheit im Störungsfall ist die Trommel 5 der Vollmantel-Schneckenzentrifuge am Rahmen 2 in einer Art "Fangeinrichtung 7" - siehe Fig. 6 - angeordnet, welche dazu ausgelegt ist, im unwahrscheinlichen Fall der Lösens der Vollmantel-Schneckenzentrifugetrommel aus ihrer Verankerung bzw. aus ihren Lagern die rotierende Trommel 5 aufzufangen und ein Ausdrehen bzw. Auslaufen der Trommel 5 innerhalb der Fangeinrichtung zu gewährleisten, ohne dass sich die Trommel 5 vom Fahrzeug lösen kann.

Die Trommel ist in an sich bekannter Weise von einer Haube 10 z.B. aus Blech umgeben. Es ist denkbar, diese Haube derart stark auszulegen, dass sie selbst als Fangeinrichtung wirkt. Bevorzugt wird aber zumindest abschnittsweise zwischen Haube 10 und Trommel 5 noch eine separate Anordnung geschaffen, z.B. nach Art einer der Außenkontur der Trommel angepassten und zumindest abschnittsweise zylindrischen, im Betrieb stillstehenden Röhre 21 (Fig. 6), die derart beschaffen und ausgelegt ist, dass sich die Trommel 5 in ihr auch nach einem - an sich nahezu auszuschließenden Lösen der Trommel 5 aus ihrer Verankerung - innerhalb der hier als Röhre ausgebildeten Fangeinrichtung 7 - ausdrehen kann, bis durch die Bremswirkung der Röhre 21 ihre Rotationsenergie verbraucht ist und sie zum Stillstand kommt.

Als Material für die Röhre 21 eignen sich Bleche aus Metalllegierungen aber unter Umständen auch Kunststoffe oder dgl., die genügend stabil und hitzebeständig sind und ähnlich zu einer Bremse die Trommel 5 zum Stillstand bringen. Eine derartige Röhre 21 ist schematisch in Fig. 6 dargestellt. Sie wird ggf. entsprechend am Rahmen direkt oder über Dämpfungselemente stabil verankert (hier nicht dargestellt).

Die Fangeinrichtung 7 kann auch aus Blechen bestehen oder solche aufweisen, welche die Trommel umgeben und/oder Bügel aus Streben (z.B. Flacheisen) 8 umfassen (siehe z.B. Fig. 4, welche beispielsweise im Endbereich der Trommel - z.B. im Bereich einer Riemenscheibe zum Antrieb der Trommel und/oder Schnecke - diese oder direkt angrenzende Teile wie ein Lagergehäuse schützend umgeben. Der Drehkäfig der Fangeinrichtung 7 könnte auch aus mehreren Streben bestehen, die entsprechend stabil ausgelegt sind (hier nicht dargestellt).

Einzelne der Bügel/Streben (Flachseisen) können auch das Lagergehäuse besonders schützen bzw. halten und sichern. Dies ist auch gut in Fig. 7 zu erkennen, die U-fömigen Schutzbügel 24 aus einem stabilen Flacheisen zeigt und auch eine Hydraulikleitungsverbindung 25 zu einem Hydraulikantrieb/-motor 19. Fig. 7 verdeutlich auch, dass die Begrenzungswände 29, 30 des Feststofffängers 27 und des Flüssigkeitsfängers 28 verstärkt ausgeführt werden können, um ergänzend ebenfalls zur Realisierung einer Auffangröhre für die Zentrifuge - in Kombination mit der Röhre 21 - beizutragen.

Mittels klammerartigen Haltebügeln 16 sind einzelne der Streben oder die Haube und ein Maschinengestell 20 für den Dekanter an dem Grundrahmen oder einem sonstigen Widerlager des Fahrzeuges direkt oder über Dämpfelemente befestigt (siehe auch Fig. 4 und 6).

Die Zentrifuge 4 und/oder die Fangeinrichtung 7 sind ihrerseits insbesondere schwingungstechnisch entkoppelt am Grundrahmen 2 des Erntefahrzeugs 1 befestigt (Federelemente 17). Hier sind einige der Bleche 8 trapezförmig oberhalb der Trommellagerung angeordnet, wohingegen ansonsten auch umgebende Teile des Fahrzeugrahmens 2 diese Funktion mit übernehmen können. Denkbar ist es auch, am Fahrzeugrahmen eine Art Ausnehmung oder Käfig aus Streben oder dgl. des Fahrzeugrahmens selbst auszubilden, aus der/dem sich die Trommel 5 nicht lösen kann.

Durch die überraschende Maßnahme der Fangeinrichtung wird es möglich, den Einsatz der Vollmantel-Schneckenzentrifuge am Fahrzeug mit hoher Sicherheit zu realisieren.

In Fig. 6 erfolgt der Flüssigkeitsaustrag auf der rechten zylindrischen Seite des Dekanters und der Feststoffaustrag am konischen - hier linken - Ende des Dekanters. Hier sind auch die Füße 17 (federnd) und die Lagergehäuse 23 zu erkennen, die auch durch Bleche gesichert sein können.

Die Puffer- und Sammeltanks sind bevorzugt zwecks einer besonders raumsparenden und kompakten Auslegung auf den einander gegenüber liegenden Seiten der u-förmigen Aussparung 9 vorgesehen. Die Anordnung der Tanks ist aber weitgehend frei variierbar.

Ein bevorzugter Ablauf des erfindungsgemäßen Ernte- und Weiterverarbeitungsverfahrens ist in Fig. 3 dargestellt, wonach bei dem Ernten und Weiterverarbeiten der Trauben bevorzugt die Stationen
- Rüttelstäbe (oder ähnliches), und/oder Förderband, und/oder Entrappeinrichtung 18, und/oder Puffertank 12,
- Dekanter 4, und
- Mostsammeltank 14 auf dem Wagen und
- das Abfüllen in einen Tankwagen am Feldrand durchlaufen werden (Pfeile A).

Eine Enzymierung oder ein Zusatz sonstiger Keltereihilfsstoffe direkt am Fahrzeug ist ebenfalls denkbar und bringt weitere Vorteile mit sich, da die Verarbeitung des gewonnenen Saftes/Mostes zu Wein direkt auf dem Fahrzeug noch weiter fortgeführt werden kann. Dies ist günstig, da die weiteren Schritte direkt - ohne Zeitverlust durchgeführt werden können - was einerseits in Hinsicht auf die Qualität der zu erzeugenden Weine/Säfte vorteilhaft sein kann und andererseits in wirtschaftlicher Hinsicht.

Denkbar ist es auch, eine Erhitzungseinrichtung für den Most am Fahrzeug vorzusehen (hier nicht dargestellt), um den Most z.B. bei der Herstellung von Rotwein erwärmen zu können.

In der Vollmantel-Schneckenzentrifuge 4 wird zudem der Trester von Most/Saft abgetrennt, der vorzugsweise direkt im Weinberg verbleibt.

Es ist auch denkbar, dass durch den Einsatz geeigneter Messtechnik am Fahrzeug Parameter wie Ernteertrag, Zucker-, Säuregehalt, pH-Wert und andere Mostparameter flächengenau erfasst und ausgewertet werden. Dies kann z.B. in Verbindung mit einem sattelitengestützten Standortbestimmungssystem (z.B. GPS: Global-Positioning-System) erfolgen.

Eine Reinigung des Systems, insbesondere der Zentrifuge kann in einfacher Weise mit Art einer Cleaning-In-Place-Anlage erfolgen.

Zudem sind auch an Bord im Fahrzeug Analysen des Mostes und/oder der Rohstoffe denkbar sowie eine intelligente Steuerung der Ernte.

Eine Kühlung am Fahrzeug ist optional ebenfalls denkbar sowie eine gesteuerte Nutzung der Verweilzeit des Mostes am Fahrzeug für Reaktionen im Most.

### Bezugszeichen

- Trauben-Erntefahrzeug: 1
- Fahrzeugrahmen: 2
- Räder: 3
- Vollmantel-Schneckenzentrifuge: 4
- Trommel: 5
- Fahrerkabine: 6
- Fangeinrichtung: 7
- Bleche: 8
- Aussparung: 9
- Haube: 10
- Vermahleinrichtung: 11
- Puffertanks: 12
- Pumpe: 13
- Sammeltank: 14
- Pumpe: 15
- Haltebügel: 16
- Füße, Federelemente: 17
- Entrappeinrichtung: 18
- Hydraulikmotor: 19
- Maschinengestell: 20
- Röhre: 21
- Neigevorrichtung: 22
- Trommellagergehäuse: 23
- Flacheisen: 24
- Hydraulikleitungsverbindung: 25
- Feststofffänger: 27
- Flüssigkeitsfänger: 28
- Begrenzungswände: 29,30

## Patentansprüche

1. Spalierobst-, insbesondere Beeren- oder Traubenerntefahrzeug zum Ernten der Früchte und zur Weiterverarbeitung, insbesondere zu einem Saft oder Most auf dem Erntefahrzeug, mit folgenden Merkmalen:
a) einem Rahmen (2), der dazu ausgelegt ist, eine Reihe von abzuerntenden Pflanzen im Bereich einer u-förmigen Aussparung (9) zu übergreifen,
b) an dem Rahmen (2) angeordneten Rädern (3) beidseits der u-förmigen Aussparung (9), und
c) einer Einrichtung zum Abtrennen der Früchte von den Pflanzen und vorzugsweise einer Entrappeinrichtung zum Abtrennen der Früchte von Pflanzenresten wie Stielen, Rappen, Kämme, Stengel oder dgl.,
**dadurch gekennzeichnet, daß**
d) direkt im Erntefahrzeug (1) eine Schneckenzentrifuge, insbesondere eine Vollmantel-Schneckenzentrifuge (4), angeordnet ist, die zur Trennung und Klärung einer Fruchtmaische wenigstens in eine Feststoff- und eine Flüssigkeitsphase dient.

2. Olivenerntefahrzeug zum Ernten der Früchte und zur Weiterverarbeitung, insbesondere zu einem Öl auf dem Erntefahrzeug, mit folgenden Merkmalen:
a) einem Rahmen (2), der dazu ausgelegt ist, eine Reihe von abzuerntenden Pflanzen im Bereich einer u-förmigen Aussparung (9) zu übergreifen, und
b) an dem Rahmen (2) angeordneten Rädern (3) beidseits der u-förmigen Aussparung (9), und
c) zumindest einer Einrichtung zum Abtrennen der Früchte von den Pflanzen,
**dadurch gekennzeichnet, daß**
d) direkt im Erntefahrzeug (1) eine Schneckenzentrifuge, insbesondere eine Vollmantel-Schneckenzentrifuge (4), angeordnet ist, die zur Trennung und Klärung eines Olivenbreis wenigstens in eine Öl- und eine Wasserphase ausgelegt ist.

3. Erntefahrzeug nach Anspruch 1 oder 2, **dadurch gekennzeichnet, dass** die Vollmantel-Schneckenzentrifuge (4) an dem Rahmen (2) angeordnet ist.

4. Erntefahrzeug nach Anspruch 3, **dadurch gekennzeichnet, daß** die Vollmantel-Schneckenzentrifuge (4) seitlich der Aussparung (9) am Rahmen (2) angeordnet ist.

5. Erntefahrzeug nach einem der vorstehenden Ansprüche, **dadurch gekennzeichnet, daß** die Vollmantel-Schneckenzentrifuge am Rahmen (2) vorzugsweise in Fahrzeuglängsrichtung angeordnet ist.

6. Erntefahrzeug nach einem der vorstehenden Ansprüche, **dadurch gekennzeichnet, daß** die Vollmantel-Schneckenzentrifuge am Rahmen (2) zwischen den Rädern (3) angeordnet ist.

7. Erntefahrzeug nach einem der vorstehenden Ansprüche, **dadurch gekennzeichnet, daß** der Antrieb der Vollmantel-Schneckenzentrifuge mittels einer direkt am Fahrzeug angeordneten Energiequelle erfolgt.

8. Erntefahrzeug nach einem der vorstehenden Ansprüche, **dadurch gekennzeichnet, daß** die Energiequelle bzw. Antriebsvorrichtung wenigstens einen Hydraulikmotor aufweist, der (die) an eine Hydraulik des Spalierobst-, insbesondere Beeren- oder Traubenerntefahrzeuges angeschlossen ist (sind).

9. Erntefahrzeug nach einem der vorstehenden Ansprüche, **dadurch gekennzeichnet, daß** die Energiequelle bzw. Antriebsvorrichtung einen Gas-, E-lektro-, Benzin-, Diesel- oder Hybridmotor aufweist.

10. Erntefahrzeug nach einem der vorstehenden Ansprüche, **gekennzeichnet durch** wenigstens einen oder mehrere der Vollmantel-Schneckenzentrifuge vor- und/oder nachgeschalteten Puffer- oder Sammeltanks (12, 14).

11. Erntefahrzeug nach einem der vorstehenden Ansprüche, **gekennzeichnet durch** wenigstens eine Pumpe (13, 15) zur Schnellentleerung des wenigstens einen Puffer- oder Sammeltanks (14).

12. Fahrzeug mit einer Vollmantel-Schneckenzentrifuge, insbesondere Erntefahrzeug nach einem der vorstehenden Ansprüche, **dadurch gekennzeichnet, daß** die Vollmantel-Schneckenzentrifuge vorzugsweise am Rahmen in einer Fangeinrichtung (7) angeordnet ist, die dazu ausgelegt ist, im Falle einer Störung die rotierende Trommel (5) aufzufangen und ein Ausdrehen bzw. Auslaufen der Trommel (5) innerhalb der Fangeinrichtung zu gewährleisten, ohne daß sich die Trommel (5) vom Fahrzeug löst.

13. Fahrzeug nach einem der vorstehenden Ansprüche, **dadurch gekennzeichnet, daß** die Fangeinrichtung (7) aus Blechen und/oder Bügel bzw. Streben besteht, welche im Endbereich der Trommel - z.B. im Bereich einer Riemenscheibe zum Antrieb der Trommel und/oder Schnecke - diese oder direkt angrenzende Teile wie ein Lagergehäuse sichernd umgeben..

14. Fahrzeug nach einem der vorstehenden Ansprüche, **dadurch gekennzeichnet, daß** die Fangeinrichtung als Fangkäfig die Trommel konzentrisch umgibt.

15. Fahrzeug nach einem der vorstehenden Ansprüche, **dadurch gekennzeichnet, daß** die Vollmantel-Schneckenzentrifuge (4) und/oder die Fangeinrichtung (7) schwingungsentkoppelt am Grundrahmen (2) des Fahrzeugs befestigt ist/sind.

16. Erntefahrzeug nach einem der vorstehenden Ansprüche, **dadurch gekennzeichnet, dass** die Vollmantel-Sehneckenzentrifuge (4) derart am Fahrzeug angeordnet ist, dass sie mittels einer Neigevorrichtung allein oder mitsamt dem Fahrzeugaufbau in Abhängigkeit von der Schräglage der abzuerntenden Rebzeile stets im wesentlichen oder genau horizontal ausgerichtet werden kann.

17. Erntefahrzeug nach einem der vorstehenden Ansprüche, **dadurch gekennzeichnet, daß** die Trommel für eine Verarbeitung der Trauben bei einer Zentrifugalbeschleunigung von mehr als 1000g, insbesondere mehr als 2000g, ausgelegt ist.

18. Verfahren zur Spalierobst-, insbesondere Beeren- oder Traubenernte mit einem Erntefahrzeug nach einem der vorstehenden Ansprüche, **dadurch gekennzeichnet, daß** direkt im Erntefahrzeug (1) mittels der Schneckenzentrifuge, insbesondere einer Vollmantel-Schneckenzentrifuge (4), eine Trennung und Klärung einer Furchtmaische wenigstens in eine Feststoff- und eine Flüssigkeitsphase erfolgt.

19. Verfahren nach Anspruch 18, **dadurch gekennzeichnet, daß** in der Vollmantel-Schneckenzentrifuge (4) abgetrennte Feststoffe direkt auf das Erntefeld verbracht werden können.

20. Verfahren nach einem der Ansprüche 18 oder 19, **dadurch gekennzeichnet, dass** nach dem Ernten der Trauben die Stationen
■ Entrappeinrichtung (18) und/oder Vermahleinrichtung (11), und/oder Puffertank (12),
■ Dekanter (4),
■ Mostsammeltank (14)
■ und das Abfüllen in einen Tankwagen
durchlaufen werden.

21. Verfahren nach einem der vorstehenden Ansprüche 18 bis 20, **dadurch gekennzeichnet, dass** bei der Verarbeitung der Trauben zu Rotwein direkt im Erntefahrzeug eine thermische oder nichtthermische Farbstoffextraktion durchgeführt wird.

22. Verfahren nach einem der vorstehenden Ansprüche 18- 21, **dadurch gekennzeichnet, daß** die Trauben bei einer Beschleunigung von mehr als 1000g, insbesondere mehr als 2000g, verarbeitet werden.

23. Verfahren nach einem der vorstehenden Ansprüche 18 - 22, **dadurch gekennzeichnet, daß** der Dekanter bei der Traubenverarbeitung so eingestellt wird, dass ein Trubgehalt kleiner oder gleich 1Vol% erreicht wird.

## Claims

1. Vehicle for harvesting espalier fruit, in particular berries or grapes, and for processing the same further, in particular into a juice or must on the harvesting vehicle, having the following features:
a) a frame (2), by means of which a row of plants which are to be harvested is spanned in the region of a u-shaped recess (9),
b) wheels (3), arranged on the frame (2), on both sides of the u-shaped recess (9), and
c) an arrangement for separating the fruits from the plants and preferably a picking arrangement for separating the fruits from plant leftovers such as stems, stalks or the like,
**characterized in that**
d) a helical conveyor centrifuge, in particular a solid-bowl helical conveyor centrifuge (4), is arranged directly in the harvesting vehicle (1) and serves for separating and clarifying a fruit mash at least into a solid phase and a liquid phase.

2. Olive-harvesting vehicle for harvesting the fruits and for processing the same further, in particular into an oil on the harvesting vehicle, having the following features:
a) a frame (2), by means of which a row of plants which are to be harvested is spanned in the region of a u-shaped recess (9),
b) wheels (3), arranged on the frame (2), on both sides of the u-shaped recess (9), and
c) at least one arrangement for separating the fruits from the plants,
**characterized in that**
d) a helical conveyor centrifuge, in particular a solid-bowl helical conveyor centrifuge (4), is arranged directly in the harvesting vehicle (1) and is designed for separating and clarifying an olive pulp at least into an oil phase and a water phase.

3. Harvesting vehicle according to Claim 1 or 2, **characterized in that** the solid-bowl helical conveyor centrifuge (4) is arranged on the frame (2).

4. Harvesting vehicle according to Claim 3, **characterized in that** the solid-bowl helical conveyor centrifuge (4) is arranged on the frame (2) to the side of the recess (9).

5. Harvesting vehicle according to one of the preceding claims, **characterized in that** the solid-bowl helical conveyor centrifuge is arranged on the frame (2) preferably in the longitudinal direction of the vehicle.

6. Harvesting vehicle according to one of the preceding claims, **characterized in that** the solid-bowl helical conveyor centrifuge is arranged on the frame (2), between the wheels (3).

7. Harvesting vehicle according to one of the preceding claims, **characterized in that** the solid-bowl helical conveyor centrifuge is driven by means of a power source arranged directly on the vehicle.

8. Harvesting vehicle according to one of the preceding claims, **characterized in that** the power source or drive means has at least one hydraulic motor, and this (or these) is (or are) connected to a hydraulic unit of the vehicle for harvesting espalier fruit, in particular berries or grapes.

9. Harvesting vehicle according to one of the preceding claims, **characterized in that** the power source or drive means has a gas motor, electric motor, petrol motor, diesel motor or hybrid motor.

10. Harvesting vehicle according to one of the preceding claims, **characterized by** at least one or more buffer or collecting tanks (12, 14) arranged upstream and/or downstream of the solid-bowl helical conveyor centrifuge.

11. Harvesting vehicle according to one of the preceding claims, **characterized by** at least one pump (13, 15) for the quick emptying of the at least one buffer or collecting tank (14).

12. Vehicle with a solid-bowl helical conveyor centrifuge, in particular harvesting vehicle according to one of the preceding claims, **characterized in that** the solid-bowl helical conveyor centrifuge is preferably arranged on the frame, in an intercepting arrangement (7) which is designed in order, in the case of malfunctioning, to intercept the rotating drum (5) and to ensure that the drum (5) comes to a standstill within the intercepting arrangement without the drum (5) becoming detached from the vehicle.

13. Vehicle according to one of the preceding claims, **characterized in that** the intercepting arrangement (7) comprises metal plates and/or brackets or struts which, in the end region of the drum - e.g. in the region of a belt pulley for driving the drum and/or helical conveyor - securely enclose the same or directly adjacent parts such as a bearing housing.

14. Vehicle according to one of the preceding claims, **characterized in that** the intercepting arrangement encloses the drum concentrically as an intercepting cage.

15. Vehicle according to one of the preceding claims, **characterized in that** the solid-bowl helical conveyor centrifuge (4) and/or the intercepting arrangement (7) are/is fastened with vibration isolation on the basic frame (2) of the vehicle.

16. Harvesting vehicle according to one of the preceding claims, **characterized in that** the solid-bowl helical conveyor centrifuge (4) is arranged on the vehicle such that, by means of an inclining apparatus, it can always be oriented essentially or precisely horizontally on its own, or together with the vehicle superstructure, in dependence on the oblique position of the line of the vines which is to be harvested.

17. Harvesting vehicle according to one of the preceding claims, **characterized in that** the drum is designed for processing the grapes with a centrifugal acceleration of more than 1000 g, in particular more than 2000 g.

18. Process for harvesting espalier fruit, in particular berries or grapes, using a harvesting vehicle according to one of the preceding claims, **characterized in that** a fruit mash is separated and clarified at least into a solid phase and a liquid phase directly in the harvesting vehicle (1) by means of the helical conveyor centrifuge, in particular a solid-bowl helical conveyor centrifuge (4).

19. Process according to Claim 18, **characterized in that** solids separated off in the solid-bowl helical conveyor centrifuge (4) can be moved directly onto the harvesting field.

20. Process according to either of Claims 18 and 19, **characterized in that**, following harvesting of the grapes, the latter proceed through the following stations
• picking arrangement (18) and/or grinding arrangement (11) and/or buffer tank (12),
• decanter (4),
• must-collecting tank (14)
• and introduction into a tanker.

21. Process according to one of preceding Claims 18 to 20, **characterized in that,** when the grapes are processed into red wine directly in the harvesting vehicle, thermal or non-thermal colour extraction is carried out.

22. Process according to one of preceding Claims 18-21, **characterized in that** the grapes are processed with an acceleration of more than 1000 g, in particular more than 2000 g.

23. Process according to one of preceding Claims 18-22, **characterized in that**, during processing of the grapes, the decanter is set so as to achieve a lees content of less than or equal to 1% by volume.

## Revendications

1. Véhicule pour récolter des fruits cultivés en espalier, en particulier des grains ou des grappes de raisin pour la récolte des fruits et pour la transformation ultérieure, en particulier en un jus ou moût sur le véhicule de récolte, présentant les caractéristiques suivantes :
a) un châssis (2) qui est conçu pour couvrir un rang de plantes à récolter dans la zone d'un évidement en U (9),
b) des roues (3) disposées sur le châssis (2) des deux côtés de l'évidement en U (9), et
c) un dispositif de séparation des fruits des plantes, et de préférence un dispositif d'évacuation des rafles pour séparer les fruits des restes de plantes, tels que les queues, les rafles, les crêtes, les tiges ou similaires,
**caractérisé en ce que**
d) une centrifugeuse à vis sans fin, en particulier une centrifugeuse à vis sans fin à bol plein (4), est placée directement dans le véhicule de récolte (1), la centrifugeuse servant à la séparation et à la décantation d'un moût de fruits au moins en une phase solide et une phase liquide.

2. Véhicule de récolte d'olives pour récolter des fruits et pour la transformation ultérieure, en particulier en une huile sur le véhicule de récolte, présentant les caractéristiques suivantes :
a) un châssis (2) qui est conçu pour couvrir un rang de plantes à récolter dans la zone d'un évidement en U (9), et
b) des roues (3) disposées sur le châssis (2) des deux côtés de l'évidement en U (9), et
c) au moins un dispositif de séparation des fruits des plantes,
**caractérisé en ce que**
d) une centrifugeuse à vis sans fin, en particulier une centrifugeuse à vis sans fin à bol plein (4), est placée directement dans le véhicule de récolte (1), la centrifugeuse servant à la séparation et à la décantation d'une pâte d'olives au moins en une phase huileuse et une phase aqueuse.

3. Véhicule de récolte selon la revendication 1 ou 2, **caractérisé en ce que** la centrifugeuse à vis sans fin à bol plein (4) est placée sur le châssis (2).

4. Véhicule de récolte selon la revendication 3, **caractérisé en ce que** la centrifugeuse à vis sans fin à bol plein (4) est placée sur le côté de l'évidement (9) sur le châssis (2).

5. Véhicule de récolte selon l'une des revendications précédentes, **caractérisé en ce que** la centrifugeuse à vis sans fin à bol plein est placée sur le châssis (2) de préférence dans la direction longitudinale du véhicule.

6. Véhicule de récolte selon l'une des revendications précédentes, **caractérisé en ce que** la centrifugeuse à vis sans fin à bol plein est placée sur le châssis (2) entre les roues (3).

7. Véhicule de récolte selon l'une des revendications précédentes, **caractérisé en ce que** l'entraînement de la centrifugeuse à vis sans fin à bol plein est assuré au moyen d'une source d'énergie placée directement sur le véhicule.

8. Véhicule de récolte selon l'une des revendications précédentes, **caractérisé en ce que** la source d'énergie et/ou le dispositif d'entraînement comprend au moins un moteur hydraulique, qui est(sont) raccordé(s) à un circuit hydraulique du véhicule de récolte de fruits cultivés en espalier, en particulier des grains ou des grappes de raisin.

9. Véhicule de récolte selon l'une des revendications précédentes, **caractérisé en ce que** la source d'énergie et/ou le dispositif d'entraînement comprend un moteur à gaz, électrique, à essence, diesel ou hybride.

10. Véhicule de récolte selon l'une des revendications précédentes, **caractérisé par** au moins une ou plusieurs des centrifugeuses à vis sans fin à bol plein située(s) en amont et/ou en aval du réservoir tampon ou réservoir collecteur (12, 14).

11. Véhicule de récolte selon l'une des revendications précédentes, **caractérisé par** au moins une pompe (13, 15) destinée à la vidange rapide du au moins un réservoir tampon ou réservoir collecteur (14).

12. Véhicule avec une centrifugeuse à vis sans fin à bol plein, en particulier véhicule de récolte selon une des revendications précédentes, **caractérisé en ce que** la centrifugeuse à vis sans fin à bol plein est placée de préférence sur le châssis dans un dispositif d'arrêt (7) qui est conçu pour intercepter en cas de panne le tambour rotatif (5) et garantir une sortie et/ou un roulement du tambour (5) à l'intérieur du dispositif d'arrêt, sans que le tambour (5) ne se détache du véhicule.

13. Véhicule selon l'une des revendications précédentes, **caractérisé en ce que** le dispositif d'arrêt (7) est en tôles et/ou en traverses et/ou entretoises, qui entourent de façon sûre ce dispositif ou des parties directement adjacentes, tel un logement de palier, dans la zone terminale du tambour - par exemple dans la zone d'une poulie à courroie pour l'entraînement du tambour et/ou de la vis sans fin.

14. Véhicule selon l'une des revendications précédentes, **caractérisé en ce que** le dispositif d'arrêt entoure concentriquement le tambour comme une cage d'arrêt.

15. Véhicule selon l'une des revendications précédentes, **caractérisé en ce que** la centrifugeuse à vis sans fin à bol plein (4) et/ou le dispositif d'arrêt (7) est/sont fixé(s) avec un découplage des oscillations sur le châssis de base (2).

16. Véhicule selon l'une des revendications précédentes, **caractérisé en ce que** la centrifugeuse à vis sans fin à bol plein (4) est disposée sur le véhicule, de telle sorte qu'elle peut être alignée toujours sensiblement ou exactement horizontalement ou verticalement, au moyen d'un dispositif d'inclinaison, seule ou avec l'ensemble du véhicule en fonction de la position inclinée du rang de vigne à récolter.

17. Véhicule de récolte selon l'une des revendications précédentes, **caractérisé en ce que** le tambour est conçu pour un traitement des grappes de raisin avec une vitesse centrifuge de plus de 1000 g, en particulier plus de 2000 g.

18. Procédé pour récolter des fruits cultivés en espalier, en particulier des grains ou des grappes de raisin avec un véhicule de récolte selon une des revendications précédentes, **caractérisé en ce que** directement dans le véhicule de récolte (1) au moyen de la centrifugeuse à vis sans fin, en particulier une centrifugeuse à vis sans fin à bol plein (4), ont lieu une séparation et une décantation d'un moût de fruits au moins en une phase solide et une phase liquide.

19. Procédé selon la revendication 18, **caractérisé en ce que** des matières solides séparées dans la centrifugeuse à vis sans fin à bol plein (4) peuvent être amenées directement sur le champ de récolte.

20. Procédé selon l'une des revendications 18 ou 19, **caractérisé en ce qu'**après la récolte des grains les stations
dispositif d'évacuation des rafles (18) et/ou dispositif de mouture (11),
et/ou réservoir tampon (12),
décanteur (4),
réservoir collecteur de moût (14)
et le transvasement dans un camion-citerne
sont parcourues.

21. Procédé selon l'une des revendications précédentes 18 à 20, **caractérisé en ce que** lors de la transformation des grains de raisin en vin rouge, une extraction de colorant thermique ou non thermique est réalisée directement dans le véhicule de récolte.

22. Procédé selon l'une des revendications précédentes 18 à 21, **caractérisé en ce que** les grains de raisin sont traités avec une accélération de plus de 1000 g, en particulier plus de 2000 g.

23. Procédé selon l'une des revendications précédentes 18 à 22, **caractérisé en ce que** le décanteur lors de la transformation des grains de raisin est réglé de telle sorte que la teneur en dépôt est inférieure ou égale à 1 %Vol.
